# EUROPÄISCHE PATENTSCHRIFT

(11) **EP 0 712 199 B1**
(45) Veröffentlichungstag und Bekanntmachung des Hinweises auf die Patenterteilung: **20.05.1998**
(21) Anmeldenummer: 95117557.9
(22) Anmeldetag: 08.11.1995
(51) Int. Cl.: H02K 21/00, H02K 1/27

(54) **Transversalflussmaschine**
Motor with tranverse flux
Moteur à flux transversal

(30) Priorität: 10.11.1994 DE 4440166
(43) Veröffentlichungstag der Anmeldung: 15.05.1996
(73) Patentinhaber: Voith Turbo GmbH, 89522 Heidenheim (DE)
(72) Erfinder: Lange, Andreas, D-89522 Heidenheim (DE)
(74) Vertreter: Weitzel, Wolfgang, Dr.-Ing. Patentanwalt

(56) Entgegenhaltungen:
- EP-A- 0 373 987
- WO-A-90/09697
- DE-A- 3 705 089
- DE-C- 4 138 014
- US-A- 3 168 686

## Beschreibung

Die Erfindung betrifft eine Transversalflußmaschine gemäß dem Oberbegriff von Anspruch 1. Auf DE 37 05 089 C2 wird verwiesen.

Die günstigen Eigenschaften von Transversalflußmaschinen sind bekannt. Hierzu gehören vor allem die hohe Energiedichte, die besonders durch eine Ausführung mit zwei Luftspalten erreicht wird. Dabei liegt ein Luftspalt radial außen und ein anderer radial innen. Die beiden Luftspalte sind magnetisch in Reihe geschaltet.

Der Rotor ist als zylindrischer Ring gestaltet. In einer stirnseitigen Ansicht wechseln dabei Weicheisenelemente und Magnete ab, so daß jeweils ein Magnet von zwei Weicheisenelementen begrenzt wird und umgekehrt. Der Rotor umfaßt im allgemeinen zwei solcher Ringe, zwischen denen sich ein Kunststoffring befindet.

Die Statoren, also Außenstator und Innenstator - sind aus einer Vielzahl von Weicheisenelementen aufgebaut. Diese sind hufeisenförmig. Die freien Schenkel dieser Hufeisen sind dabei den beiden genannten Ringen aus Magneten und Weicheisen, aus denen der Rotor aufgebaut ist, zugewandt.

Die Magnete des Rotors sind bei bekannten Transversalflußmaschinen planparallele Plättchen. In einem achssenkrechten Schnitt gesehen sind die beiden Begrenzungsflächen eines jeden Magnetplättchens somit parallel zueinander. Die Weicheisenelemente zwischen den Magneten müssen demgemäß keilförmig sein.

Handelt es sich um kleine Maschinen mit geringer Polzahl, so ist die Krümmung sehr groß (oder der Krümmungsradius sehr klein). Die Stator-Weicheisenelemente des Außenstators und des Innenstators sind - wiederum in einem achssenkrechten Schnitt gesehen - gleich breit. Beim inneren Stator sitzen sie sehr dicht beieinander, während sie beim Außenstator einen größeren Abstand haben. Dies führt dazu, daß die Flußdichten im Innenluftspalt höher als im Außenluftspalt sind. Dies ist unvorteilhaft, weil sich hieraus im inneren und im äußeren Luftspalt unterschiedliche magnetische Ausnutzungen ergeben. Die Maschine wird somit nicht optimal ausgenutzt.

Der Erfindung liegt die Aufgabe zugrunde, eine Transversalflußmaschine gemäß dem Oberbegriff von Anspruch 1 derart zu gestalten, daß die magnetische Ausnutzung eine optimale ist.

Diese Aufgabe wird durch die kennzeichnenden Merkmale von Anspruch 1 gelöst. Der Erfinder hat erkannt, daß sich eine Angleichung der Flußdichte im radial inneren und im radial äußeren Luftspalt dadurch herstellen läßt, daß sich die Magnete von außen nach innen verjüngen. Die Verjüngung kann eine stufenweise sein, beispielsweise nach Art einer gestuften Pyramide. Sie kann aber auch kontinuierlich verlaufen. Auch ist es denkbar, daß sich die Magnete von außen nach innen sowohl sprungartig verjüngen, außerdem aber auch auf einen Teil ihrer radialen Erstreckung eine kontinuierliche Verjüngung aufweisen.

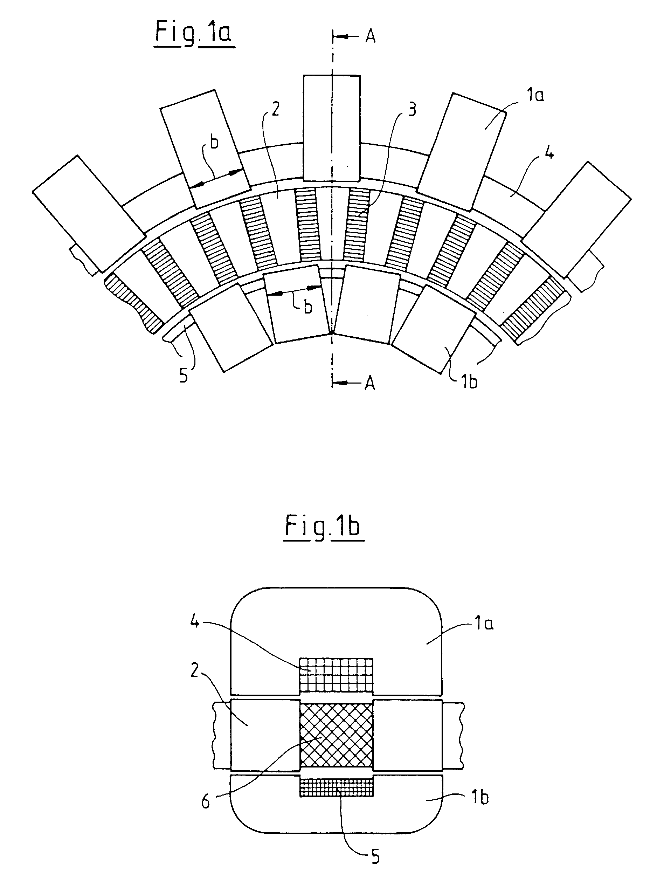

Der Stand der Technik sowie die Erfindung sind anhand der Zeichnung näher erläutert. Figur 1a zeigt eine Transversalflußmaschine gemäß dem Stande der Technik in einem achssenkrechten Schnitt. Figur 1b ist ein Schnitt durch den Gegenstand von Figur 1, gelegt in der Schnittebene A-A. Man erkennt aus diesen Figuren eine Vielzahl von äußeren Stator-Weicheisenelementen 1a sowie von inneren Stator-Weicheisenelementen 1b. Den äußeren sowie den inneren Statorelementen ist jeweils eine Ringwicklung 4 bzw. 5 zugeordnet. Wie man sieht, ist die Ringwicklung hierbei von den hufeisenförmigen Stator-Weicheisenelementen 1a bzw. 1b umschlossen.

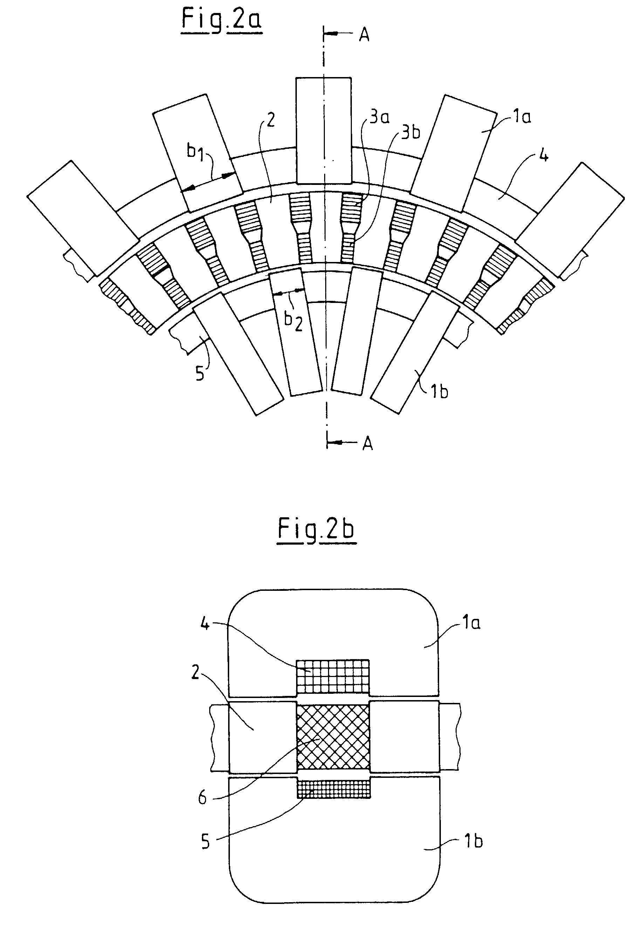

Zwischen den äußeren und den inneren Stator-Weicheisenelementen der Ausführungsform gemäß Figur 2a befindet sich der drehbar gelagerte, zylindrische Rotor. Dieser ist aus zwei Ringen aufgebaut, die ihrerseits zusammengesetzt sind aus einer Vielzahl von Magneten 3a, 3b sowie diesen benachbart Weicheisenelementen 2. Somit befinden sich jeweils zwei Magnete 3a, 3b zwischen zwei einander benachbarten Weicheisenelementen 2. Die beiden genannten Ringe aus Magneten und Weicheisenelementen sind in axialer Richtung nebeneinander angeordnet. Zwischen ihnen befindet sich ein durchgehender, d.h. sich über den gesamten Umfang erstreckender Kunststoffring 6.

Wie man aus Figur 2a erkennt, liegt eine Verjüngung der Magnete von außen nach innen vor. Die radial äußeren Magnete 3a haben nämlich in Umfangsrichtung eine größere Erstreckung als die radial inneren Magnete 3b. (Diese Erstreckung in Umfangsrichtung wird auch "Magnethöhe" genannt). In radialer Richtung zwischen zwei einander zugeordneten Magneten 3a und 3b befindet sich ein Verbindungselement.

Wie man ferner aus Figur 2a erkennt, ist die Breite b₂ der inneren Stator-Weicheisenelemente 1b geringer als die Breite b₁ der äußeren Stator-Weicheisenelemente 1a. Dies hat eine günstige Folge: Die radial inneren Stator-Weicheisenelemente 1b können nämlich in radialer Richtung eine größere Erstreckung haben, also weiter radial nach einwärts verlaufen, bevor sie zusammenstoßen. Damit wird aber zugleich der von dem einzelnen hufeisenförmigen Element umschlossene Raum größer. Dieser Raum nimmt, wie oben erwähnt, die Innenwicklung 5 auf. Damit kann die Innenwicklung 5 genauso groß bemessen werden wie die Außenwicklung 4.

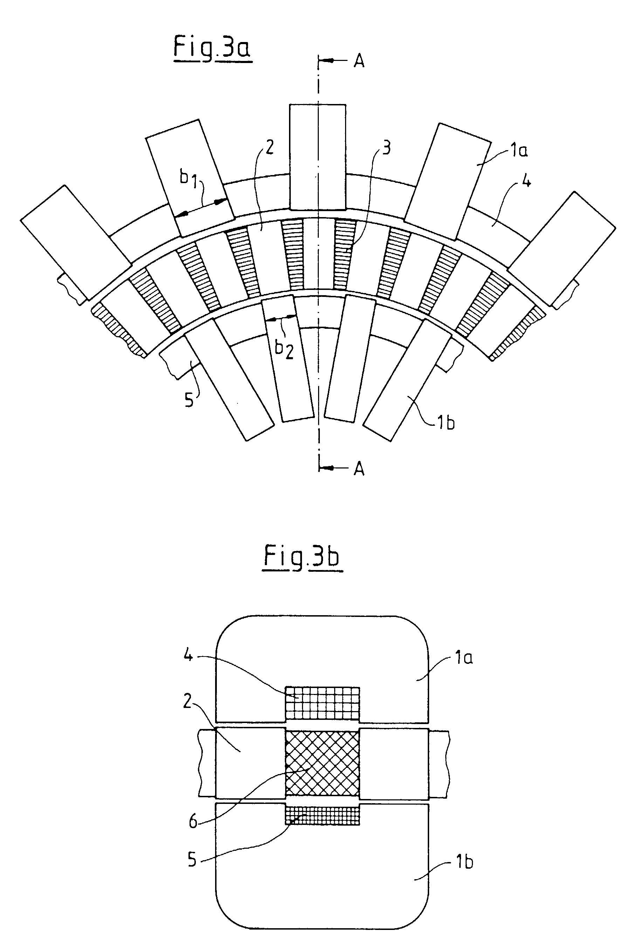

Eine alternative Ausführungsform ist in den Figuren 3a und 3b dargestellt. Auch hier verjüngen sich die Magnete 3 wiederum von außen nach innen. Sie haben somit Trapezgestalt. Demgemäß sind sie in der Darstellung von Figur 2a keilförmig. Dabei können die Magnete wiederum unterteilt, aber durch irgendwelche Elemente miteinander verbunden sein, wobei die Trennfuge - in der Darstellung von Figur 2a - auf einem Kreisbogen liegen kann.

Bei der Ausführungsform gemäß Figuren 2a und 2b haben die inneren Stator-Weicheisenelemente 1b wiederum eine geringere Breite b₂ als die radial äußeren Stator-Weicheisenelemente 1a.

## Patentansprüche

1. Transversalflußmaschine
1.1 mit einer Mehrzahl von äußeren Stator-Weicheisenelementen (1a);
1.2 mit einer Mehrzahl von inneren Stator-Weicheisenelementen (1b);
1.3 mit jeweils einer Ringwicklung (4, 5) des äußeren und des inneren Stators;
1.4 mit einem Rotor, der - in einem achssenkrechten Schnitt gesehen - aus miteinander abwechselnden Magneten (3, 3a, 3b) und Weicheisenelementen (2) aufgebaut ist;
gekennzeichnet durch die folgenden Merkmale:
1.5 die Magnete (3, 3a, 3b) verjüngen sich von außen nach innen;
1.6 die Breite (b₂) der inneren Stator-Weicheisenelemente (1b) ist - in einem achssenkrechten Schnitt gesehen - kleiner als die Breite (b₁) der äußeren Stator-Weicheisenelemente (1a).

2. Transversalflußmaschine nach Anspruch 1, dadurch gekennzeichnet, daß die Verjüngung der Magnete (3, 3a, 3b) mit dem Verhältnis der Breiten der äußeren Stator-Weicheisenelemente (1a) und der inneren Stator-Weicheisenelemente (1b) einhergeht.

3. Transversalflußmaschine nach Anspruch 1 oder 2, dadurch gekennzeichnet, daß die Verjüngung der Magnete (3a, 3b) eine stufenförmige ist.

4. Transversalflußmaschine nach einem der Ansprüche 1 bis 3, dadurch gekennzeichnet, daß die Verjüngung der Magnete (3) eine kontinuierliche ist.

## Claims

1. Motor with transverse flux
1.1 with a plurality of external stator soft-iron elements (1a);
1.2 with a plurality of internal stator soft-iron elements (1b);
1.3 with a respective circular winding (4, 5) of the external and the internal stator;
1.4 with a rotor which is, as seen in an axis-perpendicular cross-section, composed of alternating magnets (3, 3a, 3b) and soft-iron elements (2),
**characterised by** the following features:
1.5 the magnets (3, 3a, 3b) narrow from the exterior towards the interior;
1.6 the width (b₂) of the interior stator soft-iron elements (1b) is, as seen in an axis-perpendicular cross-section, smaller than the width (b₁) of the exterior stator soft-iron elements (1a).

2. Motor with transverse flux according to Claim 1, **characterised in that** the narrowing of the magnets (3, 3a, 3b) coincides with the ratio of the widths of the exterior stator soft-iron elements (1a) and the inner stator soft-iron elements (1b).

3. Motor with transverse flux according to Claim 1 or 2, **characterised in that** the narrowing of the magnets (3a, 3b) is stepped.

4. Motor with transverse flux according to one of Claims 1 to 3, **characterised in that** the narrowing of the magnets (3) is continuous.

## Revendications

1. Moteur à flux transversal comprenant :
1.1- plusieurs éléments de fer doux (la) du stator extérieur,
1.2- plusieurs éléments de fer doux du stator intérieur (1b),
1.3- avec chaque fois un enroulement annulaire (4, 5) du stator extérieur et du stator intérieur,
1.4- un rotor qui, vu selon une coupe perpendiculaire à l'axe, se compose d'une alternance d'aimants (3, 3a, 3b) et d'éléments en fer doux (2),
caractérisé en ce que
1.5- les aimants (3, 3a, 3b) vont en diminuant de l'extérieur vers l'intérieur,
1.6- la largeur (b₂) des éléments de fer doux (1b) du stator intérieur est, vue en coupe perpendiculaire à l'axe, inférieure à la largeur (b₁) des éléments de fer doux (1a) du stator extérieur.

2. Moteur à flux transversal selon la revendication 1,
caractérisé en ce que
le rétrécissement des aimants (3, 3a, 3b) correspond au rapport des largeurs des éléments de fer doux (1a) du stator extérieur et des éléments de fer doux (1b) du stator intérieur.

3. Moteur à flux transversal selon les revendications 1 ou 2,
caractérisé en ce que
le rétrécissement des aimants (3a, 3b) est en forme de gradin.

4. Moteur à flux transversal selon l'une quelconque des revendications 1 à 3,
caractérisé en ce que
le rétrécissement des aimants (3) est continu.
